# EUROPEAN PATENT APPLICATION

(11) **EP 2 187 306 A1**
(43) Date of publication of application: **19.05.2010**
(21) Application number: 09168362.3
(22) Date of filing: 21.08.2009
(51) Int. Cl.: G06F 9/445, H04N 5/00

(54) **Image processing apparatus and control method thereof**

(30) Priority: 05.11.2008 KR 20080109223
(71) Applicant: Samsung Electronics Co., Ltd., Suwon-si, Gyeonggi-do 442-742 (KR)
(72) Inventor: Lee, Seung-hoon, Yeonsu-gu, Incheon (KR); Kim, Je-ik, Suwon-si (KR)
(74) Representative: Waddington, Richard

(57) **Abstract**

Disclosed are an image processing apparatus and an control method of the image processing apparatus which stores an executable application, the control method including: modularizing the application into a plurality of modules allowing selective updating of the plurality of modules, designating an address corresponding to each of the plurality of modules, and generating an updated application if the application is updated; and loading each of the plurality of modules to the designated address to execute when executing the updated application.

## Description

### BACKGROUND OF THE INVENTION

### 1. Field of the Invention

Apparatuses and methods consistent with the present invention relate to an image processing apparatus and a control method thereof executing an application for system operation, contents replaying, etc., and more particularly, to an image processing apparatus and a control method thereof which updates and executes an application.

### 2. Description of the Related Art

An image processing apparatus processes input contents having various types or formats to be displayed on a display panel, such as a liquid crystal display (LCD), a plasma display panel (PDP), etc. The image processing apparatus is mounted with an application software for controlling a system operation, or replaying input contents.

The application of the image processing apparatus may be executed in a system booting when a system power supply is turned on, or may be selectively executed when performing a predetermined function.

Because of the development of home network technology and due to the demands and the desire of convenience by a user, the functions of an image processing apparatus have become various and complicated. and the application on the image processing apparatus reflects this trend to increase the data capacity.

After the application is mounted to the image processing apparatus during the manufacturing process thereof, a continuous updating management is necessary because of various factors such as correcting an error, adding or replacing a new function, etc. However, in updating an application, since the data capacity of the application increases, the amount of time needed in transmitting and updating application data for updating increases.

Also, if the data capacity of an application increases, it is difficult for a manufacturer to analyze a code of the application for updating the application.

### SUMMARY OF THE INVENTION

According to the present invention there is provided an apparatus and method as set forth in the appended claims. Other features of the invention will be apparent from the dependent claims, and the description which follows.

According to an aspect of the present invention, there is provided a control method of an image processing apparatus which stores an application to be executed, the control method of the image processing apparatus including: modularizing the application into a plurality of modules allowing selective updating of the plurality of modules, designating an address corresponding to each of the plurality of modules, and generating an updated application if updating the application; and loading each of the plurality of modules to the designated address for execution if executing the updated application.

The updating the application may include: selectively receiving at least one of the modules from an external source and updating the application modules using the received at least one of the plurality of modules.

The updating the application may include deleting the received at least one of the plurality of modules if the updated application is generated.

The selectively receiving at least one of the modules may include: receiving a broadcasting signal, and extracting the at least one of the plurality of modules from the received broadcasting signal.

The plurality of application modules may include one of an executing object and at least one shared object recalled by the executing object.

The executing object may include an information area which designates an address of the shared object to recall the shared object, and the updating the application may include recording the designated address to the information area of the executing object.

The image processing apparatus may include a main memory to which the application is loaded to be executable, and the updating the application may include: loading the executing object and the shared object to the designated address of the main memory when executing the executing object, and recalling the loaded shared object when recalling the shared object during execution of the executing object.

The image processing apparatus may include a main memory which stores the application to be executed, and the updating the application may include: loading the executing object to the main memory to execute, and loading the shared object to a designated address of the main memory to recall when recalling the shared object during executing of the executing object.

According to another aspect of the present invention, there is provided an image processing apparatus, including: a main memory which stores an application to be executed; and a processor which modularizes the application into a plurality of modules allowing selective updating of the plurality of modules, designates an address corresponding to each of the plurality of modules, and generates an updated application when updating the application; and loads each of the plurality of modules to the designated address to execute if executing the updated application.

The processor may selectively receive at least one of the plurality of modules from an external source, and may update the application modules using the received at least one of the plurality of modules.

The processor may delete the at least one of the plurality of modules received from the external source if the updated application is generated.

The processor may receive a broadcasting signal, and may extract the at least one of the plurality of modules from the received broadcasting signal.

The plurality of application modules may include one of an executing object and at least one shared object recalled by the executing object.

The executing object may include an information area which designates an address of the shared object to recall the shared object, and the processor may record the designated address to the information area of the executing object.

The processor may load the executing object and the shared object to the designated address of the main memory when executing the executing object, and may recall the loaded shared object when recalling the shared object during executing of the executing object.

The processor may load the executing object to the main memory for execution, and may load the shared object to the designated address of the main memory to recall when recalling the shared object during execution of the executing object.

The image processing apparatus may include a sub memory which stores the application to be loaded to the main memory, and may maintain the stored application if a system power supply is interrupted.

### BRIEF DESCRIPTION OF THE DRAWINGS

The present invention will become apparent and more readily appreciated from the following description of the exemplary embodiments, taken in conjunction with the accompanying drawings, in which:
FIG. 1 is a block diagram of an image processing apparatus according to an exemplary embodiment of the present invention;
FIG. 2 schematically illustrates the type of an executing object in the image processing apparatus in FIG. 1;
FIG. 3 is a flowchart schematically illustrating a control method of the image processing apparatus in FIG. 1;
FIG. 4 is a flowchart illustrating a method of updating an application in the image processing apparatus in FIG. 1; and
FIG. 5 is a flowchart illustrating a method of recalling and executing a shared object when executing an executing object in the image processing apparatus in FIG. 1.

### DETAILED DESCRIPTION OF EXEMPLARY EMBODIMENTS

Reference will now be made in detail to the embodiments of the present invention, examples of which are illustrated in the accompanying drawings, wherein like reference numerals refer to like elements throughout. The exemplary embodiments are described below so as to explain the present invention by referring to the figures. Repetitive description with respect to like elements of different exemplary embodiments may be omitted for the convenience of clarity.

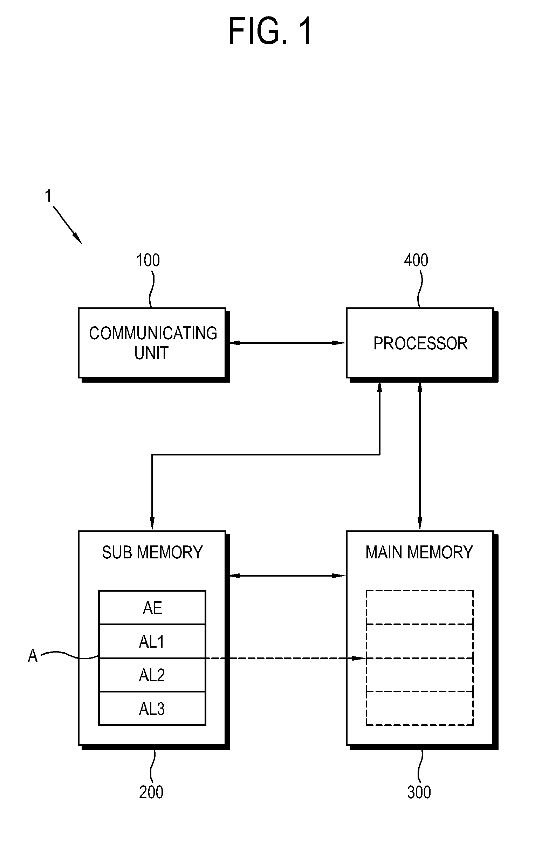

FIG. 1 is a block diagram of an image processing apparatus 1 according to an exemplary embodiment of the present invention. The image processing apparatus 1 according to the present exemplary embodiment may be implemented in various ways. For example, the image processing apparatus 1 may be implemented as a television, a set top box, a media player replaying an optical storage medium, such as a digital versatile disk (DVD) or a Blu-ray disk, a portable media player, etc.

As shown in FIG. 1, the image processing apparatus 1 according to an exemplary embodiment is mounted with an application A to be executed, and the application A may be executed during a system booting. Also, the application A may be provided to correspond to a predetermined function of the image processing apparatus 1 to be selectively executed when the predetermined function is performed. In the exemplary embodiment, the image processing apparatus 1 is exemplarily described to include the single application A, but is not limited thereto. A plurality of applications may be mounted on the image processing apparatus 1.

The type and standard of the application A is not defined. The application A may be configured to be executable in a Linux base, and for this, the image processing apparatus 1 may be mounted with a Linux kernel. In the exemplary embodiment, the application A is exemplarily described to follow a Linux standard, but is not limited thereto.

The image processing apparatus 1 in the exemplary embodiment includes a main memory 300 to which the application A, which contains a plurality of modules, is loaded so as to be executable, and a processor 400 which designates addresses respectively corresponding to a plurality of application modules AE, AL1, AL2 and AL3, and respectively loads the modules AE, AL1, AL2 and AL3 to the designated addresses of the main memory 300 to be executed.

Also, the image processing apparatus 1 further includes a communicating unit 100 receiving data from an external source, and a sub memory 200 in which the application A is stored to be loaded to the main memory 300.

Based on this configuration, the image processing apparatus 1 selectively performs updating of each module AE, AL1, AL2 and AL3 instead of updating the entire application A, and accordingly, designates the addresses to which the application module AE, AL1, AL2 and AL3 are respectively loaded. Then, whenever executing the application A, each module AE, AL1, AL2 and AL3 is loaded to the previously designated address of the main memory 300.

Hereinafter, each configuration of the image processing apparatus 1 will be described.

The communicating unit 100 receives data for updating from each module AE, AL1, AL2 and AL3 of the application A. The data is input from an external source to transmit to the processor 400. In order to accomplish this, , the communicating unit 100 may be implemented in various configurations, and for example, may receive data for updating through a broadcasting signal, a network, an external memory device (not shown), etc.

When a broadcasting station (not shown) transmits a broadcasting signal, the broadcasting station may include data for updating in a specific frequency band of the broadcasting signal. The communicating unit 100 may extract the data for updating from the specific frequency band of the received broadcasting signal to the image processing apparatus 1 by controlling the processor 400.

Also, the communicating unit 100 may be connected to a server (not shown) supplying data for updating through a network which receives the data for updating, or may receive data for updating stored in an external memory device (not shown) detachably mounted to the image processing apparatus 1.

The sub memory 200 stores various data which may be executed or referred to by the processor 400 in addition to storing the application A. The sub memory 200 may be implemented as a non volatile memory, for example, a flash memory, a hard disk drive (HDD), a solid state drive (SSD), etc. capable of maintaining previously stored data even when electric power is interrupted.

The application A stored in the sub memory 200 is loaded to the main memory 300 to be executed. That is, to execute the application A, at first, the processor 400 loads the application A to the main memory 300. Unlike the sub memory 200, data previously loaded to the main memory 300 is not kept volatile if electric power is interrupted.

The main memory 300 has an address by each loading area of data, and to execute the application modules AE, AL1, AL2 and AL3, the processor 400 accesses the addresses of the corresponding modules AE, AL1, AL2 and AL3.

The processor 400 loads the application A stored in the sub memory 200 to the main memory 300, and executes the loaded application A. The application A is divided into a plurality of modules AE, AL1, AL2 and AL3 depending on a function thereof, and each module AE, AL1, AL2 and AL3 can be executed as one application A through a mutual link.

According to an exemplary embodiment, the application A executed by the processor 400 includes an executing object AE, and at least one shared object AL1, AL2 and AL3 which is referred to by the executing object AE. The executing object AE is an object initially executed by the processor 400 from the application A, and the shared object AL1, AL2 or AL3 is an object selectively recalled and executed as necessary during the execution of the executing object AE. Here, the shared object AL1, AL2 and AL3 may refer to another shared object AL1, AL2 and AL3.

The application A is modularized into a plurality of objects, and the processor 400 can update only the module AL1, AL2 or AL3 which needs to be updated instead of the entire application A when updating the application A. Accordingly, the data capacity for updating received by the communicating unit 100 can be reduced, and the updating time can be reduced. Also, a manufacturer is capable of managing the application A by each module, thereby easily supplying the data for updating.

The information area of the executable object is capable of recalling code or data included in the shared object AL1, AL2 and AL3 in code or data of the executing object AE. The processor 400 executes the executing object AE when first executing the application A. In executing the executing object AE, the processor 400 accesses the information area to recall and execute the corresponding shared object AL1, AL2 and AL3.

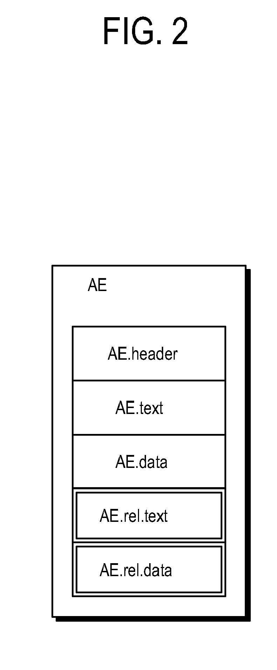

Hereinafter, the application will be described in detail by referring to FIG. 2. FIG. 2 schematically and exemplarily illustrates the type of the executing object AE of the application A according to an exemplary embodiment.

As shown in FIG. 2, the type of the executing object AE is not defined, but has an executable and linkable format (ELF) type supplied in a Linux base. Here, FIG. 2 mainly illustrates the type directly related to the exemplary embodiment.

AE.Header is a header of the executing object AE, and a meta information of the application A may be recorded therein.

A code of the executing object AE is recorded in AE.text, and a data of the executing object AE is recorded in AE.data. AE.text and AE.data are information areas in which the code and data of the executing object AE selfishly defined are recorded.

Code and data referred to by the executing object AE but not exclusively defined in the executing object AE are respectively recorded in AE.rel.text and AE.rel.data.

To execute the code and data recorded in AE.rel.text and AE.rel.data, the processor 400 determines which shared object AL1, AL2 and AL3 defines the code and data , and accesses the address of the main memory 300 to which the corresponding shared object AL1, AL2 and AL3 is loaded, thereby recalling and executing the corresponding shared object AL1, AL2 and AL3.

Accordingly, before executing the application A, the processor 400 interprets the code and data recorded in AE.rel.text and AE.rel.data of the executing object AE to determine which shared object AL1, AL2 and AL3 defines the code and data. Then, the processor 400 designates an address to which the shared object AL1, AL2 and AL3, respectively corresponding to the code and the data, is loaded. The processor 400 then records these in AE.rel.text and AE.rel.data. This process is referred to as relocation.

Accordingly, if the processor 400 recalls the code and the data recorded in AE.rel.text or AE.rel.data when executing the executing object AE, the processor 400 accesses the address previously designated to correspond with the code or the data.

Here, the corresponding shared object AL1, AL2 and AL3 may be loaded together when loading the executing object AE, or the corresponding shared object AL1, AL2 and AL3 may be loaded to the corresponding address in an event of recalling the shared object AL1, AL2 and AL3.

The processor 400 may employ various methods to designate the address of the shared object AL1, AL2 and AL3. In the exemplary embodiment, the processor 400 performs the address designating process based on a prelink command of Linux, and hereinafter, an example thereof will be described. However, the prelink command of Linux is just an example, and does not define the present invention.

The prelink command is used on a prompt as follows.

### % prelink [option] [object name]

Here, % means a prompt, not a command, to which the command is input.

For example, there is an application A including four modules, and the object name of the executing object AE is a.out, and the object names of the shared objects AL1, AL2 and AL3 are respectively libA.so, libB.so and libC.so. Each object name is just for convenience of description.

Here, if libA.so is updated, the address of code or data defined by libA.so is designated by the prelink in the information area of AE.rel.text and AE.rel.data of a.out. The command therefore is as follows.

### % prelink -N a.out libA.so

-N means a dry run among various options of the prelink, and the above command is executed so that the address for recalling libA.so can be recorded in executing a.out.

However, since there are also libB.so and libC.so in the shared objects AL1, AL2 and AL3, if the prelink is applied to only the libA.so updated as described above, duplication of the address may occur. Accordingly, if the executing object AE or one of the shared objects AL1, AL2 and AL3 is updated, in an exemplary embodiment, the prelink command is applied to all shared objects AL1, AL2 and AL3. For this command, there are the two following methods.

### % prelink -amR

### % prelink -N a.out libA.so libB.so libC.so

Among the two commands, in the first command, all object names are recorded in the command records, and only an option is designated which does not have an object name. The option -amR means that the prelink is applied to all objects.

If the application modules AE, AL1, AL2 and AL3 are updated, the processor 400 can designate and record the address for recalling the shared objects AL1, AL2 and AL3 to the executing object AE by applying the prelink command. If this process is completed, the processor 400 reboots the system to reflect the updated contents.

If the address for each module AE, AL1, AL2 and AL3 is not designed like the exemplary embodiment, that is, if the addresses of the shared objects AL1, AL2 and AL3 in which the code and the data of AE.rel.text and AE.rel.data are defined, are not designated, whenever the application A is executed, it is necessary to analyze the code and the data of AE.rel.text and AE.rel.data, and to repeat the process of designating the address of each shared object AL1, AL2 and AL3.

According to the exemplary embodiment, when updating of the application modules AE, AL1, AL2 and AL3 is performed, the addresses of the shared objects AL1, AL2 and AL3 are designated to be recorded in the executing object AE, thereby making the above repetitive process unnecessary, and accordingly, reducing the execution time of the application A.

There are the following two exemplary embodiments according to a loading time of the shared objects AL1, AL2 and AL3 when the processor 400 executes the application A after a system rebooting.

In one method, the shared objects AL1, AL2 and AL3 are loaded together when loading the executing object AE. When executing the application A, the processor 400 loads the executing object AE and all shared objects AL1, AL2 and AL3 to the address of the main memory 300 previously designated. The processor 400 executes the executing object AE, and accesses the corresponding address and recalls and executes the shared objects AL1, AL2 and AL3 previously loaded if a recalling event of the shared objects AL1, AL2 and AL3 occurs during the executing.

In another method, the executing object AE is loaded and executed at first, and then if a recalling event of the shared objects AL1, AL2 and AL3 occurs, the corresponding shared objects AL1, AL2 and AL3 are loaded to the previously designated address to be recalled. The processor 400 loads and executes only the executing object AE at first when executing the application A. If the recalling event of the shared objects AL1, AL2 and AL3 happens during the executing of the executing object AE, the processor 400 loads the corresponding shared objects AL1, AL2 and AL3 to the previously designated address, and recalls and executes the loaded shared objects AL1, AL2 and AL3.

The above two exemplary embodiments are merely examples. However, the present invention is not defined thereto, and may employ other various methods.

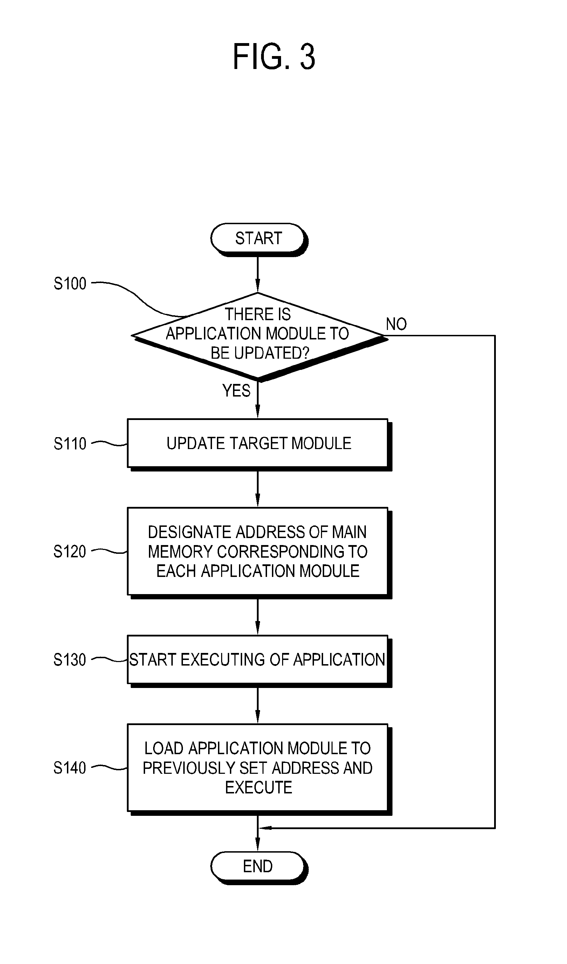

With this configuration, a control method of the image processing apparatus 1 according to the exemplary embodiment will be described by referring to FIG. 3. FIG. 3 is a flowchart schematically illustrating the control method

As shown in FIG. 3, the processor 400 determines whether there are application modules AE, AL1, AL2 and AL3 to be updated (S100).

If there are application modules AE, AL1, AL2 and AL3 to be updated, the processor 400 receives data for updating from an external sourceto perform updating of the modules AE, AL1, AL2 and AL3 (S110). Then, the processor 400 designates addresses of the main memory 300 respectively corresponding to the modules AE, AL1, AL2 and AL3 according to the updating of the modules AE, AL1, AL2 and AL3 (S120).

If this process is completed, a new updated application A is generated. If the updated application A is generated, the processor 400 deletes the data for updating received from the external source.

The processor 400 starts executing of the updated application A (S130). Accordingly, the processor 400 loads and executes the application modules AE, AL1, AL2 and AL3 to the addresses previously designated (S140).

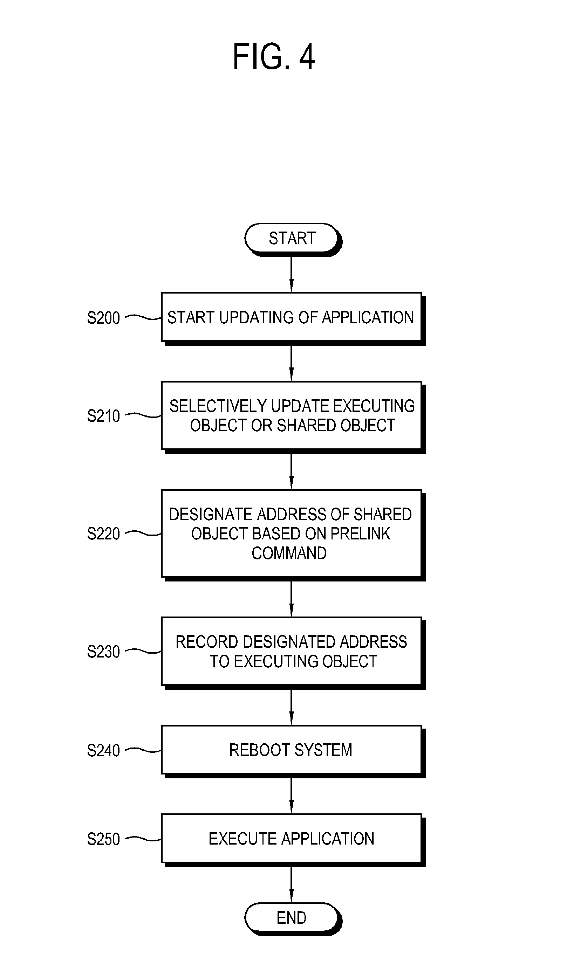

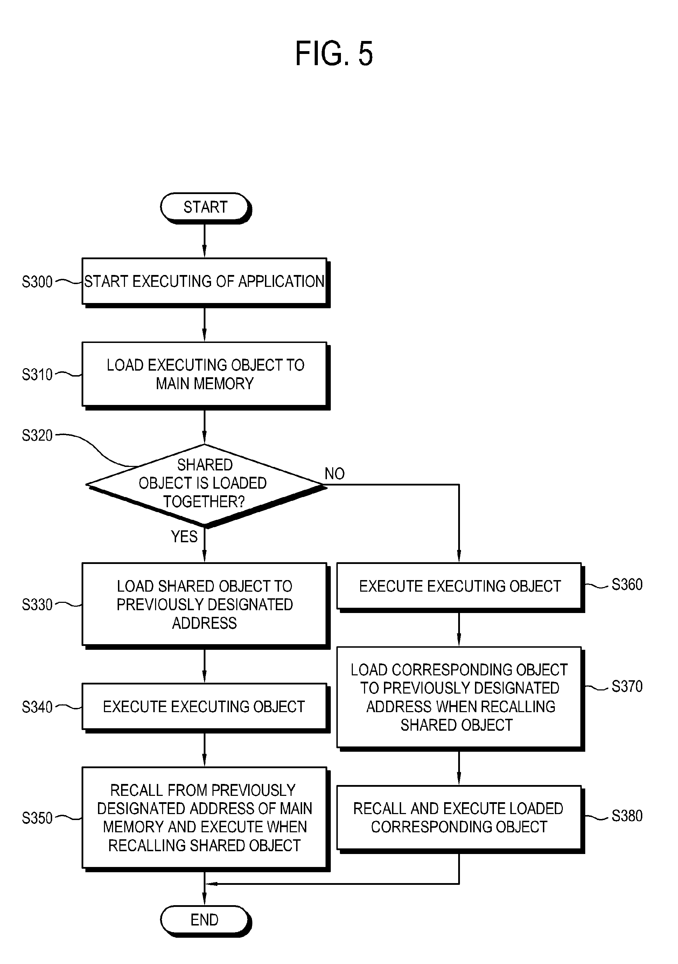

Hereinafter, the process in FIG. 3 is described in more detail by referring to FIGs. 4 and 5.

FIG. 4 is a flowchart illustrating an updating method of the application A in an exemplary embodiment.

As shown in FIG. 4, if updating of the application A is initialized (S200), the processor 400 selectively updates an object to be updated among the executing object AE or the shared objects AL1, AL2 and AL3 stored in the sub memory 200 (S210).

The processor 400 designates addresses of the shared objects AL1, AL2 and AL3 based on a prelink command (S220), and records the designated addresses to the executing object AE (S230).

The processor 400 reboots the system to reflect the setting change (S240), and executes the application A (S250).

FIG. 5 is a flowchart illustrating an executing method of the application A, specifically, a method of recalling and executing the shared objects AL1, AL2 and AL3 during execution of the executing object. The completed state of the process shown in FIG. 4 corresponds to an initial state in FIG. 5.

As shown in FIG. 5, the processor 400 initializes the execution of the application A (S300).

The processor 400 loads the executing object AE to the main memory 300 (S310). Here, the processor 400 determines whether to load the shared objects AL1, AL2 and AL3 together with the executing object AE (S320). This determination may be set in a manufacturing process, or may be determined by a user.

If the shared objects AL1, AL2 and AL3 are determined to be loaded together, the processor 400 loads the shared objects AL1, AL2 and AL3 to the address previously designated (S330).

The processor 400 executes the executing object AE (S340). The processor 400 performs an operation and a process depending on code and data of the executing object AE loaded to the main memory 300.

If a recalling event of the shared objects AL1, AL2 and AL3 happens during the execution of the executing object AE, the processor 400 recalls and executes the corresponding shared objects AL1, AL2 and AL3 from the previously designated address of the main memory 300 (S350). That is, if the processor 400 processes code and data defined in the shared objects AL1, AL2 and AL3 during execution of code and data recorded in the executing object AE, the processor 400 accesses the address, to which the corresponding shared objects AL1, AL2 and AL3 are loaded, to recall the shared objects AL1, AL2 and AL3.

If the shared objects AL1, AL2 and AL3 are determined not to be loaded together in the operation S320, the processor 400 executes the executing object AE (S360).

If a recalling event of the shared objects AL1, AL2 and AL3 happens during execution of the executing object AE, the processor 400 reads the corresponding shared objects AL1, AL2 and AL3 from the sub memory 200 to load to the previously designated address of the main memory 300 (S370). Then, the processor 400 recalls and executes the loaded shared objects AL1, AL2 and AL3 (S380).

The application A is modularized to be selectively updated, thereby reducing the size of the data for updating, and reducing the updating time.

Also, the addresses of the shared objects AL1, AL2 and AL3 are designated to be recorded to the executing object AE if the application A is updated therefore, it is unnecessary to analyze the code and data of the executing object AE and the address of the shared objects AL1, AL2 and AL3 are determined when the application A is executed. Accordingly, the execution time of the application A can be reduced.

Although a few exemplary embodiments of the present invention have been shown and described, it will be appreciated by those skilled in the art that changes may be made in these exemplary embodiments without departing from the principles of the invention, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A control method of an image processing apparatus which stores an application to be executed, the control method of the image processing apparatus comprising:
modularizing the application into a plurality of modules allowing selective updating of the plurality of modules;
designating an address corresponding to each of the plurality of modules;
generating an updated application if updating the application; and
loading each of the plurality of modules to the designated address for execution if executing the updated application.

2. The control method of the image processing apparatus according to claim 1, wherein the updating the application comprises:
selectively receiving at least one of the plurality of modules from an outside source, and
updating the application modules using the selectively received at least one of the plurality of modules.

3. The control method of the image processing apparatus according to claim 2, wherein the selectively receiving at least one of the plurality of modules comprises:
receiving a broadcasting signal and
extracting the at least one of the plurality of modules from the received broadcasting signal.

4. The control method of the image processing apparatus according to any preceding claim, wherein the plurality of application modules comprises one of an executing object and at least one shared object recalled by the executing object.

5. The control method of the image processing apparatus according to claim 4, wherein the executing object comprises an information area which designates an address of the shared object to recall the shared object, and
the updating the application comprises recording the designated address to the information area of the executing object.

6. The control method of the image processing apparatus according to claim 4 or claim 5, further comprising:
loading the application to a main memory of the image processing apparatus for execution;, and
the updating the application comprises:
loading the executing object and the shared object to a designated address of the main memory if executing the executing object, and
recalling the loaded shared object if recalling the shared object during executing of the executing object.

7. The control method of the image processing apparatus according to claim 4 or 5, further comprising:
loading the application to a main memory of the image processing apparatus for execution; and
the updating the application comprises:
loading the executing object to the main memory to execute; and
loading the shared object to a designated address of the main memory to recall if recalling the shared object during executing of the executing object.

8. An image processing apparatus, comprising:
a main memory which stores an application to be executed; and
a processor which modularizes the application into a plurality of modules allowing selective updating of the plurality of modules, designates an address corresponding to each of the plurality of modules, and generates an updated application if updating the application, and loads each of the plurality of modules to the designated address to execute if executing the updated application.

9. The image processing apparatus according to claim 8, wherein the processor selectively receives at least one of the plurality of modules from an outside source, and updates the application modules using the received at least one of the plurality of modules.

10. The image processing apparatus according to claim 9, wherein the processor receives a broadcasting signal, and extracts the at least one of the plurality of modules from the received broadcasting signal.

11. The image processing apparatus according to claim 8, 9 or 10, wherein the at least one of the plurality of application modules comprises one of an executing object and at least one shared object recalled by the executing object.

12. The image processing apparatus according to claim 11, wherein the executing object comprises an information area which designates an address of the shared object to recall the shared object, and
the processor records the designated address to the information area of the executing object.

13. The image processing apparatus according to claim 11 or 12, wherein the processor loads the executing object and the shared object to the designated address of the main memory if executing the executing object, and recalls the loaded shared object if recalling the shared object during executing of the executing object.

14. The image processing apparatus according to claim 11 or 12, wherein the processor loads the executing object to the main memory for execution, and loads the shared object to the designated address of the main memory to recall if recalling the shared object during executing of the executing object.

15. The image processing apparatus according to any one of claims 8 to 14, further comprising a sub memory which stores the application to be loaded to the main memory, and maintains the stored application if a system power supply is interrupted.
